# EUROPEAN PATENT SPECIFICATION

(11) **EP 3 413 635 B1**
(45) Date of publication and mention of the grant of the patent: **22.01.2020**
(21) Application number: 18169680.8
(22) Date of filing: 26.04.2018
(51) Int. Cl.: H04W 52/02, H04W 72/12

(54) **SYNCHRONIZING CONNECTIVITY IN WIRELESS COMMUNICATION NETWORKS**
SYNCHRONISATION DER KONNEKTIVITÄT IN DRAHTLOSKOMMUNIKATIONSNETZWERKEN
SYNCHRONISATION DE LA CONNECTIVITÉ DANS LES RÉSEAUX DE COMMUNICATION SANS FIL

(30) Priority: 05.06.2017 US 201715613353
(43) Date of publication of application: 12.12.2018
(73) Proprietor: Intel IP Corporation, Santa Clara, CA 95054 (US)
(72) Inventor: CARIOU, Laurent, Portland, OR Oregon 97219 (US); ALPERT, Yaron, TA 4533909 (IL); SADEGHI, Bahareh, Portland, OR Oregon 97229 (US); STACEY, Robert, Portland, OR Oregon 97210 (US)
(74) Representative: HGF Limited

(56) References cited:
- WO-A1-2016/159731
- US-A1- 2011 069 650
- US-A1- 2014 105 082

## Description

### TECHNICAL FIELD

This disclosure relates generally to techniques for operating a wireless network. More specifically, the disclosure describes techniques for determining a target wake time for devices in a wireless network.

### BACKGROUND

In the Internet of Things (IoT), it is not only smartphones and other portable devices that are wirelessly connected to the Internet. Rather, there may be numerous types and numbers of wirelessly connected devices (stations) in our homes, offices, and many other public and private places. For example, stations such as, appliances and other electronics, may include numerous sensors that can collect and report data about the inner workings of the device. In the loT, the data may be uploaded, for example, to the device manufacturers' servers over the Internet. In this way, the device manufacturers may be enabled to analyze the data collected, and potentially gain insights to improve, maintain, and repair the manufacturers' devices.

Document WO 2016/159731 discloses a communication technique and a system thereof for fusing, with loT technology, a 5G communication system for supporting a higher data transmission rate than a 4G system.

### Summary

Embodiments of the invention are set out in the appended claims.

### BRIEF DESCRIPTION OF DRAWINGS

Fig. 1 is a block diagram of a multi-band wireless network for synchronizing connectivity;
Fig. 2 is a block diagram of a multi-band wireless network for synchronizing connectivity;
Fig. 3 is a block diagram of a method for a multi-band wireless network for synchronizing connectivity
Fig. 4 is a block diagram of a multi-band wireless network for synchronizing connectivity; and
Fig. 5 is a block diagram of a system for synchronizing connectivity in a multi-band wireless network.

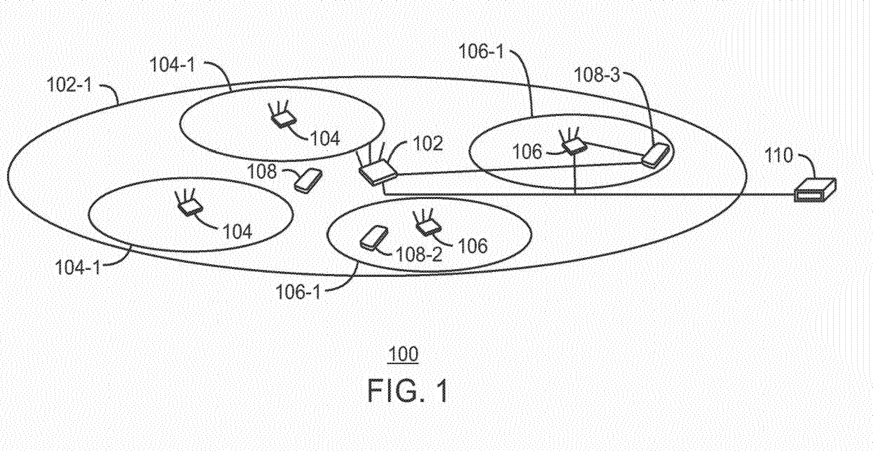

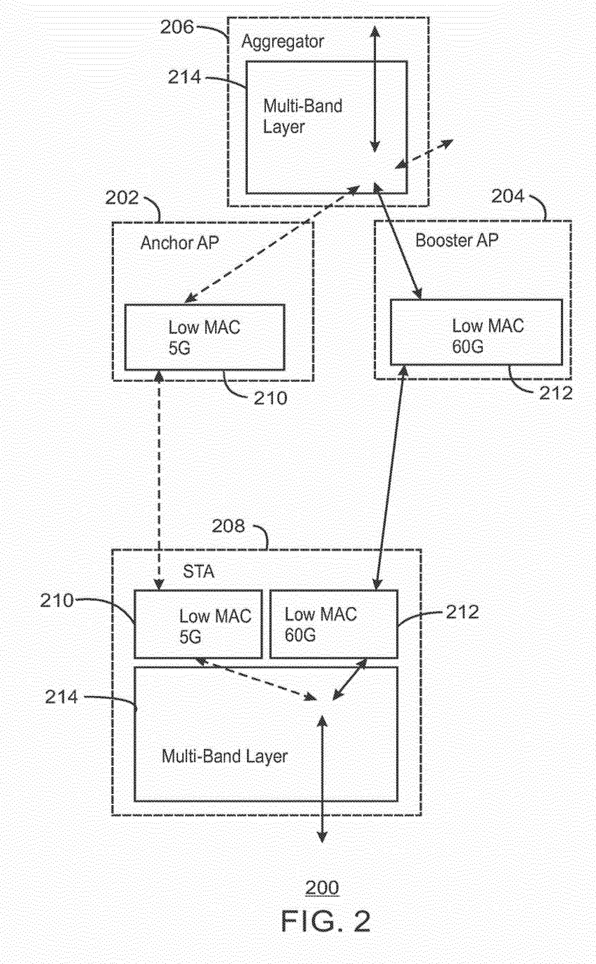

The same numbers are used throughout the disclosure and the figures to reference like components and features. Numbers in the 100 series refer to features originally found in Fig. 1; numbers in the 200 series refer to features originally found in Fig. 2; and so on.

### DETAILED DESCRIPTION

An access point (AP) may be a wireless router device that provides a connection to the Internet or other networks for wireless communication devices (stations). Stations may be devices, such as electronic appliances, smartphones, tablets and loT devices that get access to the Internet by connecting to an access point's wireless network. Additionally, stations may include computing devices, such as desktop computers, smartphones, tablets, phablets, and the like, Access points and stations can connect, and perform other communications, by transmitting their messages to each other over specific frequencies of radio bands. Radio bands are specific groupings of radio frequencies that the Federal Communications Commission may sell or license for specific purposes, or leave them free to use. Examples of radio bands for wireless communications include the 900 megahertz (MHz), and 2.4, 5, and 60 gigahertz (Ghz) bands. The higher the frequency, the higher the power, and thus, the speed of the wireless network. References to frequency herein mean radio operation frequency, as understood by one of ordinary skill.

Historically, only one radio band at a time, e.g., in the 2.4 or 5 GHz bands has been used for wireless communication. Further, the typical association has been between one AP and multiple stations. However, with the spread of wireless Internet access and the devices using it, situations may arise where single-radio band frequencies of an AP can become saturated with requests from stations to connect. For example, during a large movement of users in subway stations and airport terminals providing wireless Internet access, an AP can become overwhelmed by connection requests, unable to perform any other functions, and ultimately crash. Not in response to his specific scenario, but to generally improve the speed and efficiency of wireless communications, the 802.11 wireless protocol is expanding to a multi-band framework. In the multi-band framework, one station can perform simultaneous wireless communications over multiple radio bands.

More specifically, a single station may connect to two different APs using two different radio bands. In some embodiments, two different APs may be available for connection to a single station. In such embodiments, one radio band is used to connect with an anchor AP; and, one radio band to connect with a booster AP. The anchor AP may be an access point, such as a wireless router, through which management communications are routed. Similarly, the booster AP may be an access point, such as a wireless router; however, the booster AP may route data communications. Management communications regard the actual wireless connection between stations and APs. Data communications involve the actual data, or content, exchanged between stations and access points. Both types of communications are discussed in greater detail with respect to Figs. 1 and 2. In some embodiments, the anchor AP and the booster AP may be co-located, i.e., physically located within the same device. Alternatively, the anchor AP and booster APs may not be co-located.

Fig. 1 is a block diagram of a multi-band wireless network 100 for synchronizing connectivity. Synchronizing connectivity is a power conserving technique, where the time that stations such as, stations 108-1, 108-2, 108-3 may wake to connect to APs 102, 104, 106 and upload sensor data to private servers on the Internet, for example, is synchronized between the APs 102, 104, 106 and the stations 108-1, 108-2, 108-3.

The wireless network 100 includes the anchor AP 102, booster APs 104, 106, and a controller 110. The anchor AP 102 and booster APs 104, 106 are not co-located, meaning the APs are not included in the same device. The controller 110 may be a computing device that directs the activities of the access points 102, 104 over a wired or wireless communication link represented by the lines drawn between the controller 110 and the access points 102, 104. In some embodiments, the controller 110 may be integrated with one or more of the anchor AP 102 and booster APs 104, 106.

In some embodiments, the anchor AP 102 may be a relatively lower power AP such as, a 2.4 GHz wireless router, with a coverage area 102-1 that the anchor AP 102 may share with one or more booster APs 104, 106. A coverage area, such as coverage areas 102-1, 104-1, 106-1 indicates an area within which a station, such as stations 108-1, 108-2, 108-3, can connect to the associated AP, and thus, the Internet. Similar to the anchor AP 102, the booster APs 104, 106 may provide coverage areas 104-1, 106-1 with relatively (in comparison with the anchor AP 102) less coverage area, but higher power. For example, booster APs 104, 106 may include 5 GHz wireless routers, which can provide coverage within a radius of less than ten meters (m); and, 60 GHz wireless routers, respectively, which can provide coverage up to a radius of 5 m.

In the wireless network 100, the coverage areas 104-1, 106-1 overlap with coverage area 102-1. Accordingly, when located within an area of overlap, a station may connect to the anchor AP 102, and the booster AP 104, 106 that is providing the overlapping coverage. It is noted that the characteristics regarding coverage area and radio bands described with respect to the anchor and booster APs 102, 104, 106 are merely examples of one possible implementation. In some embodiments, the spread of coverage areas may differ, with partially or fully overlapping coverage areas. Further, specific radio bands for an anchor or booster AP may differ from the anchor and booster APs 102, 104, 106 of this example.

The wireless network 100 also includes three stations: station 108-1 appears located to the left of the anchor AP 102, and within only coverage area 102-1; the other two stations 108-2, 108-3 are located near different booster APs 106, and within coverage areas 106-1 and 106-2. For example, because station 108-1 is only within one coverage area, coverage area 102-1, station 108-1 may only communicate with the anchor AP, over the 2.4 GHz band, for example. However, stations 108-2, 108-3 both located within coverage areas 104-1 and 106-1, respectively, that overlap the 102-1 coverage area. As such, each of the stations 108-2, 108-3 can connect to either or both of the anchor AP 102 and their associated booster AP 104, 106.

Expanding to a multi-band framework may expand the available bandwidth for stations such as, stations 108-1, 108-2, 108-3 to perform wireless communication. Additionally however, using multiple bands may enable the stations 108-1, 108-2, 108-3 to reduce the total time the stations 108-1, 108-2, 108-3 are connected to the Internet, thus reducing the station's power consumption. In this way, the peak throughput may be increased over a wireless communication network with the same number of devices used in current wireless communication networks. Increased peak throughput may mean higher communication speeds. In some embodiments, the communication speeds may be increased by separating management communications from data communications.

Management communications, also referred to as the management plane, may include the messages exchanged between stations 108-1, 108-2, 108-3 and APs 102, 104, 106 with regard to the actual wireless connection between the devices. The management plane may include, for example, messages regarding the establishment, maintenance, and termination of the wireless connection. Data communications, i.e., the data plane, may include the data transferred between the stations 108-1, 108-2, 108-3 and the APs 102, 104, 106, for example. In some embodiments, the stations 108-1, 108-2, 108-3 allocate the data and management planes to different radio bands. In this way, a flood of requests on the management plane is prevented from interfering with ongoing communications on the data plane. In such embodiments, the anchor and booster APs may be non-co-located, as described with respect to Fig. 1, or co-located, as described with respect to Fig. 2.

Fig. 2 is a block diagram of a multi-band wireless network 200 for synchronizing connectivity. The wireless network 200 includes co-located anchor AP 202 and booster AP 204, an aggregator 206, and a station (STA) 208. The aggregator 206 may be a computing device, such as a link level aggregator, that takes the aggregated management and data communications and directs them to the appropriate AP such as, anchor AP 202 and booster AP 204. In order to communicate with anchor AP 202 and booster AP 204, which communicate with low MAC 5 Ghz and low MAC 60 GHz transceivers 210, 212, respectively, the aggregator 206 may include a multi-band layer transceiver 214. In some embodiments, the anchor AP 202, booster AP 204, and station 208 may communicate wirelessly with more than one interface. For example, the anchor AP 202, booster AP 204, or station 208 may include one interface for each of multiple radio bands. In some embodiments, multiple interfaces may be included that communicate over multiple frequencies of the same radio band, for example, Low 5GHz.

The station 208 may include the low MAC 5 GHz transceiver 210, low MAC 60Ghz transceiver 212, and the multi-band layer 214. The low MAC transceivers 210, 212 enable wireless communication with the anchor AP 202 and booster AP 204. The multi-band layer 214 enables the station to forward communications to other stations or APs (not shown).

The wireless network 200 shows two types of arrows passing through the aggregator 206 to the anchor AP 202 and the booster AP 204, down to the respective low media access control (MAC) transceivers 210, 212, and multi-band layer 214. These arrows represent the separate flow of communications between the management plane (the dotted arrows) and the data plane (the solid arrows). In other words, the management plane is directed over the 5 GHz band, without interference to, or competition for bandwidth with, the data plane, which is directed over the 60 GHz band in this example.

If the station 208 is, for example, an loT station, and uploads its data as it is collected, the station 208 may waste power by staying connected to the anchor AP 202 while waiting to transmit data. Data transmissions could happen in short bursts and sporadically over an entire day, potentially. In contrast, the same amount of data collected in a day may potentially be uploaded in only a few minutes, or less, if included in a few transmissions scheduled regularly throughout the day. Thus, power may be conserved by limiting the wireless network connection between the anchor AP 202 and station 208 to regularly scheduled, and brief, service periods instead of maintaining long-standing wireless network connections. Further, the station 208 may have limited power resources such as batteries. Effective power management techniques may conserve the power used for Internet connectivity and associated data transfers, which may extend the useful life of the station's limited power resources.

In some embodiments, a power management method may thus be implemented by a wireless communication network where the stations and APs conserve power by limiting Internet connectivity and data transfers to specific service periods. This power management method enables the APs 202, 204 and the station 208 to synchronize communication activities within specific availability periods, and to avoid communications during periods when the APs 202, 204 are unavailable. In this way, the wireless network 200 may help reduce the station's power consumption. Additionally, with specific periods for communication, there is less collision between competing communications over a single radio band. Accordingly, such wireless networks may improve the quality of service (QoS) provided by wireless communication networks, such as wireless network 200.

Stations may upload their data through the APs according to terms of the service period such as the radio band over which communication takes place, the duration of the service period, the frequency of the service period, and the like. In some embodiments, the terms of the service period may be classified as individual or broadcast.

The individual is an agreement that is negotiated between an individual station and an individual access point. For example, a station may request an individual agreement from an access point with which the station shares one or more radio bands. After a series of exchanges, the station and access point may create an individual agreement specifying the terms of a service period. An example service period may specify, for example, a target wake time 100ms after transmission of a beacon, e.g., sync frame, on the 5 GHz band, for a duration of 10 msec. Performing synchronization according to the individual agreement represents a closed loop method, where, once the terms are agreed to, there may be no further change to the synchronization process. The individual agreement may be useful for scenarios where the number of stations connected at any one time is well below the capacity of the AP. In such scenarios, the access point may accommodate individually scheduled service periods for the connected stations.

In some embodiments, the terms of the service period are specified by the access point in an actual broadcast. During the broadcast, the access point indicates in its beacons the terms of the service period. Stations sharing the radio band over which the broadcast is transmitted, and the radio band used during the broadcast service period, may thus connect to the access point, and upload or download their data to or from the Internet according to the service period terms specified in the broadcast. The broadcast service period may be useful in scenarios where the access point may be connecting a large number of stations with respect to the access point's capacity, making it impractical for the access point to negotiate and perform service periods according to the numerous, and potentially conflicting, service period terms that may arise during negotiations with so many stations. In such scenarios, scheduling a service period according to the AP's schedule may be practical.

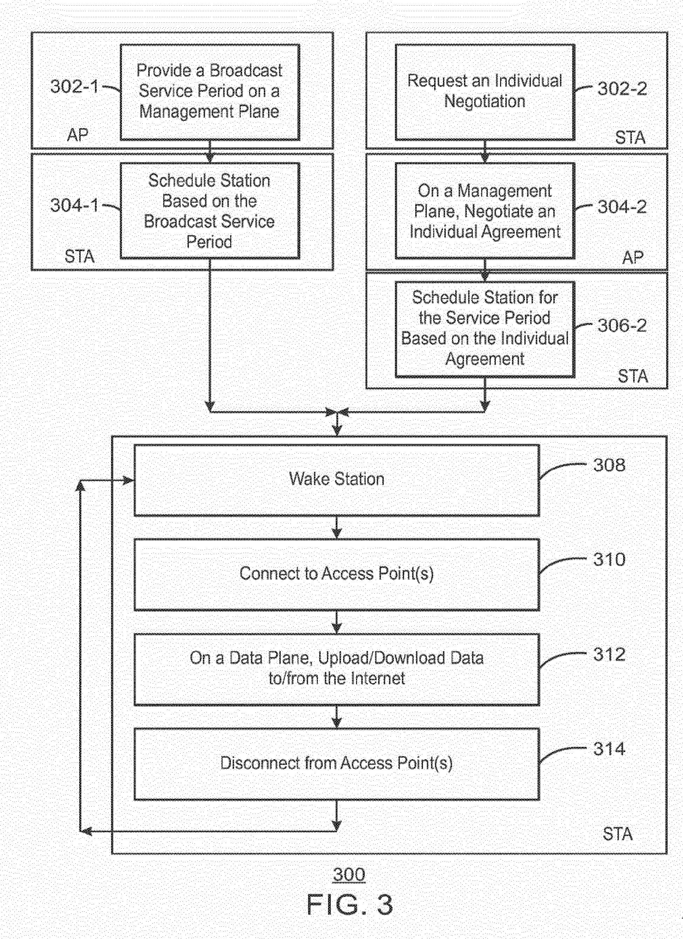

Fig. 3 is a block diagram of a method 300 for a multi-band wireless network for synchronizing connectivity. The method 300 may be performed by at least one station and at least one AP that share one or more radio bands. The AP may be an anchor AP or booster AP.

The method 300 may begin at block 302-1 or 302-2 based on whether the AP available to the station provides individual or broadcast service periods. If the APs provide individual service periods, the method 300 begins at block 302-1.

At block 302-1, the AP may broadcast terms of one or more service periods on the management plane using a service period element. The service period element is a data packet that may be used to define the specific terms of a service period. By broadcasting a service period element with specific service period terms, the AP is notifying stations listening on the AP's radio band when the stations can schedule a service period to connect with the AP in accordance with the broadcast service period.

In some embodiments, the booster APs provide a broadcast service period for only their own service periods, whereas the anchor APs provide broadcast service periods for all the booster APs within the anchor AP's coverage area. For example, with respect to Fig. 1, the booster APs 104, 106 may only advertise their own broadcast service periods. In contrast, the anchor AP 102 may advertise the broadcast service period for itself, and the booster APs 104, 106, which are within the coverage area 102-1.

At block 304-1, the station may schedule itself for a service period based on the broadcast service period. As stated previously, as station may communicate on multiple frequencies, or multiple radio bands. As such, it is possible that a station may become aware of a broadcast service period advertised on one radio band, and schedule itself to perform a data transfer that takes place on another radio band.

The stations may alternatively initiate the creation of an individual agreement. If the APs provide individual agreements, the method 300 begins at block 302-2.

At block 302-2, the station may request an individual negotiation. The request may be specified in a service period element transmitted over one or more of its radio bands. Thus, the station may request an individual negotiation by transmitting a service period element specifying individual service period terms.

At block 304-2, the station and the AP may negotiate the individual agreement. The individual negotiation is an exchange of service period element messages between the station and the AP, wherein the terms of the service period are negotiated. Thus, the AP accepts the offer specified in the request from the station, or provides a counter-offer to the station's request with different terms for the service period specified in a new service period element. Similarly, the station may counter-offer with alternate terms in another service period element, and on, exchanging service period elements in this way until there is agreement to the terms of the service period. Because of the availability of multiple frequencies and radio bands, the station may negotiate the individual agreement on one radio band, and perform the data transfer on another.

At block 306-2, the station schedules itself for the service period based on the individual agreement. Whether for a broadcast service period or an individual agreement, the station schedules itself for the specified service period. Additionally, whether for an individual or broadcast service period, the station performs blocks 308 through 314. Also, whether for a broadcast service period or an individual agreement, control flows from blocks 304-1 and 306-2 to block 308.

At block 308, the station wakes at the target wake time. Waking at the target wake time may involve activating the station's receiver. However, if the station is to transfer data, the transmitter of the station may also be activated from a sleep state. The station may remain in an awake state for at least the duration specified in the terms of the individual or broadcast service period.

At block 310, the station may connect to the access point. In some embodiments, connecting the station to the access point may involve a signaling exchange of management communications between the station and the AP. Specifically, the station may request to join the AP's basic service set (BSS), and wait to connect until the AP responds with an indication that the station is joined to the BSS. The BSS is a term referring to one AP and its connected stations.

At block 312, the station may upload its collected data, or download its requested data on the data plane. In some embodiments, the data plane may be transmitted over one radio band. Alternatively, the station may use more than one radio band for its data plane, wherein the station aggregates the links provided by two radio bands to take advantage of the additional bandwidth provide by the additional radio band.

At block 314, the station may disconnect from the access point. Once the service period has ended, the station may disconnect from the AP. Control may then flow to block 308, where the station may re-awake at the next target wake time.

The method 300 should not be interpreted as meaning that the blocks are necessarily performed in the order shown. Further, fewer or greater actions can be included in the method 300 depending on the design considerations of a particular implementation.

As stated previously, the service period element may be used to request and negotiate individual agreements, and to advertise broadcast service periods, by specifying the terms of the service period. These terms may include a per-band wake time field, which defines, for a specific band, a time value expressed as a positive integer and corresponding to a specific time synchronization function (TSF). The TSF is an 802.11 wireless communication standard for keeping different devices on the same clock. The per-band wake field may identify the actual wake time in terms of a specific time according to the TSF specified. In other words, the station wakes at the specified time according to the time given by the TSF.

The service period element may also include a per-band wake interval mantissa, which defines whether the service period is periodic, i.e., re-occurring, or not. Further, if the service period is periodic, the per-band wake interval mantissa defines the frequency of re-occurrence.

The non-AP STA can be connected to multiple non-co-located APs on different bands, wherein the management information relates to defining awake periods for the non-AP STA on the band/channel of one of its associated AP.

As stated previously, the anchor AP may provide broadcast service periods for the non-co-located booster APs in the anchor AP's coverage area. Thus, the anchor AP may transmit a different service period element for itself and each of the booster APs.

The service period element may also include the identification (ID) of the band or channel for which the service period applies. Alternatively, the MAC address of the associated AP on that band may be included.

In some embodiments, the service period element includes a multi-band sub-element. The multi-band sub-element may be included as part of the service period element, and may identify multiple bands or channels to which the service period terms apply. In some embodiments, the multi-band sub-element may include an indicator specifying whether the terms apply to all bands or channels used by the station. Further, the service period element itself may explicitly or implicitly specify that the service period element information is applicable on the bands or channels described in the multi-band element.

In some embodiments, the multi-band service period element can carry the information of multiple service periods. In such case, the multi-band service period element may be defined in 2 parts: a first part that includes information that is common to all service periods in all bands; and a second part that includes band-specific information for a service period. In some embodiments, there may be as many band-specific fields as the number of multi-band service periods in all available bands.

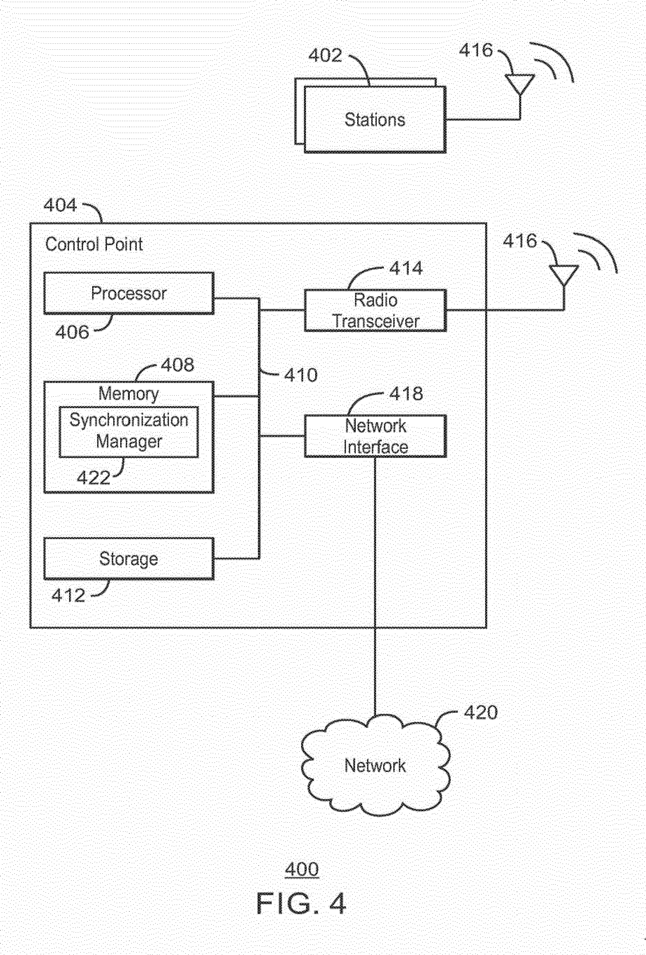

Fig. 4 is a block diagram of a multi-band wireless system 400 for synchronizing connectivity. The system 400 may include one or more stations 402 and a control point 404 to control or coordinate communications between the stations. A station 402 may be any electronic device that is configured for wireless communications using the 802.11 protocol. Examples of types of stations include desktop computers, laptop computers, tablet computers, smart phones, televisions, Internet of Things (IoT) devices, and others. The control point 404 manages communications between the stations 402 and can enable the stations 402 to connect to other networks, such as a wired Local Area Network (LAN) or the Internet.

The network of stations 402 and control point 404 may be referred to as a Basic Service Set (BSS). The BSS may be communicatively coupled to one or more additional BSSs through a distribution system to form an Extended Service Set (ESS). In some cases, the BSS may be a Personal Basic Service Set (PBSS), in which case no distribution system is present. The control point 404 may be an access point or a PBSS control point (PCP) depending on how the BSS is configured. If the BSS is a PBSS, the control point 404 is referred to as a PBSS control point (PCP). If the BSS is a part of an ESS, the control point 404 is referred to as an Access Point.

The components of the control point 404 may be implemented as Integrated Circuits (ICs), portions thereof, discrete electronic devices, or other modules, logic, hardware, software, firmware, or a combination thereof adapted in the system, or as components otherwise incorporated within a chassis of a larger system. However, some of the components shown may be omitted, additional components may be present, and different arrangement of the components shown may occur in other implementations.

The control point 404 may include a processor 406, which may be a microprocessor, a multi-core processor, a multithreaded processor, an ultra-low voltage processor, an embedded processor, or other known processing element. The processor 406 may be a part of a system on a chip (SoC) in which the processor 406 and other components are formed into a single integrated circuit, or a single package.

The processor 406 may communicate with a system memory 408 over a bus 410. Any number of memory devices may be used to provide for a given amount of system memory. As examples, the memory can be random access memory (RAM) in accordance with a Joint Electron Devices Engineering Council (JEDEC) low power double data rate (LPDDR)-based design such as the current LPDDR2 standard according to JEDEC JESD 209-2E (published April 2009), or a next generation LPDDR standard to be referred to as LPDDR3 or LPDDR4 that will offer extensions to LPDDR2 to increase bandwidth. In various implementations the individual memory devices may be of any number of different package types such as single die package (SDP), dual die package (DDP) or quad die package (Q17P). These devices, in some embodiments, may be directly soldered onto a motherboard to provide a lower profile solution, while in other embodiments the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs. For example, a memory may be configured as a DDR3LM package or an LPDDR2 or LPDDR3 memory, which is soldered onto a motherboard via a ball grid array (BGA).

The control point 404 also includes a storage device 412 for persistent storage of information such as data, applications, operating systems and so forth. The storage device 412 may contain various components to enable the control point 404 to manage communications within the system 400. The storage device 412 may be coupled to the processor 406 via the bus 410. The storage device 412 may be implemented via any type of non-transitory, machine-readable medium, such as a solid state disk drive (SSDD), a hard drive, and the others. In some examples, the storage device 412 may be implemented using a micro hard disk drive (HDD). Further, any number of new technologies may be used for the storage device 412 in addition to, or instead of, the technologies described, such resistance change memories, phase change memories, holographic memories, or chemical memories, among others.

The components may communicate over the bus 410. The bus 410 may include any number of technologies, including industry standard architecture (ISA), extended ISA (EISA), peripheral component interconnect (PCI), peripheral component interconnect extended (PCIx), PCI express (PCIe), or any number of other technologies. The bus 410 may be a proprietary bus, for example, used in a SoC based system. Other bus systems may be included, such as an I²C interface, an SPI interface, and point to point interfaces, among others.

The bus 410 may couple the processor 406 to a radio transceiver 414, for communications with the stations 402 and other control points 404. The radio transceiver 414 may include any number of frequencies and protocols, such as a WLAN unit used to implement Wi-Fi™ communications in accordance with the Institute of Electrical and Electronics Engineers (IEEE) 802.11 standard. The radio transceiver 414 may be capable of communicating over the mm wave frequency band, for example, the 60 GHz frequency band. The radio transceiver 414 may be capable of communicating over any other suitable wireless communication frequency band, in addition to or instead of the 60 GHz frequency band. In one example, radio transceiver 414 may include a multi-band wireless communication unit capable of communicating over two or more wireless communication frequency bands, e.g., the 60 GHz frequency band and the 2.4/5 GHz frequency band.

The radio transceiver 414 may be coupled to one or more antennas 416 or sets of antennas 416. The antennas 416 may include, for example, an internal and/or external RF antenna, a dipole antenna, a monopole antenna, an omni-directional antenna, a micro-strip antenna, a diversity antenna, or other type of antenna suitable for transmitting and receiving wireless communication signals.

The bus 410 may also couple the processor 406 to a network interface 418 that enables the control point 404 to connect to a network 420. The network 420 may be a wired network, such as a Local Area Network (LAN) or the Internet, for example.

The control point 404 periodically transmits beacon frames. Beacon frames are transmitted to announce the presence of the wireless network and provide information about the network, such as the network's service set identifier (SSID) and other parameters. Communication between stations 402 and/or the control point 424 may be performed between beacon transmissions. The time between beacon frame transmissions is referred to as the beacon interval.

In some embodiments, the memory 408 includes a synchronization manager 422, which performs techniques as described with respect to the access points referenced in Figs. 1 through 3.

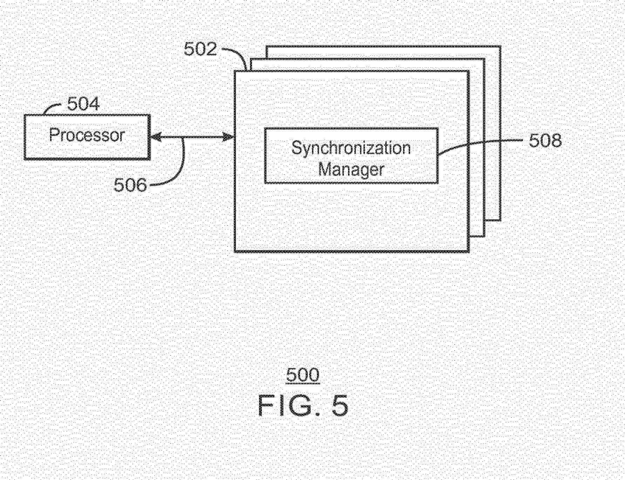

Fig. 5 is a block diagram of a system 500 for synchronizing connectivity in a multi-band wireless network. In the system 500, the computer readable media 502 may be accessed by a processor 504 over a computer bus 506. The processor 504 may be any computer processor, such as the processor described with respect to Fig. 4. Referring back to Fig. 5, the computer-readable media 502 may include code configured to direct the processor 504 to perform methods and embodiments described herein. In some embodiments, the computer-readable media 502 may be non-transitory computer-readable media. In some examples, the computer readable media 502 may be storage media. However, in any case, the computer-readable media do not include transitory media such as carrier waves, signals, and the like.

The block diagram of Fig. 5 is not intended to indicate that the computer readable media 502 is to include all of the components shown in Fig. 5. Further, the computer-readable media 502 may include any number of additional components not shown in Fig. 5, depending on the details of the specific implementation.

Various features and components discussed herein may be stored on one or more computer readable media 502, as indicated in Fig. 5. For example, a synchronization controller 508 can establish individual or broadcast service periods that define service periods within which stations and access points may transfer data. The access points may establish broadcast service periods by advertising service period elements specifying their, and other APs', service periods. Stations and APs may negotiate with each other to establish individual agreements. Accordingly, stations under individual or broadcast service periods, may wake at the target wake time, and upload whatever data the stations may have collected.

The block diagram of Fig. 5 is not intended to indicate that the computer readable media 500 is to include all of the components shown in Fig. 5. Further, the computer readable media 500 may include any number of additional components not shown in Fig. 5, depending on the details of the specific implementation.

Reference in the specification to "an example," "some examples," "one embodiment," "some embodiments," "an embodiment," etc. of the disclosed subject matter means that a particular feature, structure, or characteristic described in connection with the embodiment or example is included in at least one embodiment or example of the disclosed subject matter. Thus, the phrase "in one embodiment" or "one example" may appear in various places throughout the specification, but the phrase may not necessarily refer to the same embodiment.

In the preceding description, various aspects of the disclosed subject matter have been described. For purposes of explanation, specific numbers, systems and configurations were set forth in order to provide a thorough understanding of the subject matter. However, it is apparent to one skilled in the art having the benefit of this disclosure that the subject matter may be practiced without the specific details. In other instances, well-known features, components, or modules were omitted, simplified, combined, or split in order not to obscure the disclosed subject matter.

Various embodiments of the disclosed subject matter may be implemented in hardware, firmware, software, or combination thereof, and may be described by reference to or in conjunction with program code, such as instructions, functions, procedures, data structures, logic, application programs, design representations or formats for simulation, emulation, and fabrication of a design, which when accessed by a machine results in the machine performing tasks, defining abstract data types or low-level hardware contexts, or producing a result.

Program code may represent hardware using a hardware description language or another functional description language which essentially provides a model of how designed hardware is expected to perform. Program code may be assembly or machine language or hardware-definition languages, or data that may be compiled and/or interpreted. Furthermore, it is common in the art to speak of software, in one form or another as taking an action or causing a result. Such expressions are merely a shorthand way of stating execution of program code by a processing system which causes a processor to perform an action or produce a result.

Program code may be stored in, for example, volatile and/or non-volatile memory, such as storage devices and/or an associated machine readable or machine accessible medium including solid-state memory, hard-drives, floppy-disks, optical storage, tapes, flash memory, memory sticks, digital video disks, digital versatile discs (DVDs), etc., as well as more exotic mediums such as machine-accessible biological state preserving storage. A machine readable medium may include any tangible mechanism for storing, transmitting, or receiving information in a form readable by a machine, such as antennas, optical fibers, communication interfaces, etc. Program code may be transmitted in the form of packets, serial data, parallel data, etc., and may be used in a compressed or encrypted format.

Program code may be implemented in programs executing on programmable machines such as mobile or stationary computers, personal digital assistants, set top boxes, cellular telephones and pagers, and other electronic devices, each including a processor, volatile and/or non-volatile memory readable by the processor, at least one input device and/or one or more output devices. Program code may be applied to the data entered using the input device to perform the described embodiments and to generate output information. The output information may be applied to one or more output devices. One of ordinary skill in the art may appreciate that embodiments of the disclosed subject matter can be practiced with various computer system configurations, including multiprocessor or multiple-core processor systems, graphics processing units, minicomputers, mainframe computers, as well as pervasive or miniature computers or processors that may be embedded into virtually any device. Embodiments of the disclosed subject matter can also be practiced in distributed computing environments where tasks may be performed by remote processing devices that are linked through a communications network.

Although operations may be described as a sequential process, some of the operations may in fact be performed in parallel, concurrently, and/or in a distributed environment, and with program code stored locally and/or remotely for access by single or multi-processor machines. In addition, in some embodiments the order of operations may be rearranged. Program code may be used by or in conjunction with embedded controllers.

While the disclosed subject matter has been described with reference to illustrative embodiments, this description is not intended to be construed in a limiting sense. Various modifications of the illustrative embodiments, as well as other embodiments of the subject matter, which are apparent to persons skilled in the art to which the disclosed subject matter pertains are deemed to lie within the scope of the disclosed subject matter.

## Claims

1. An apparatus for synchronizing connectivity in 802.11 wireless communication networks (100), the apparatus comprising:
means to participate in a 802.11 communication on a management plane between at least one 802.11 station (108-1) and a first 802.11 access point (102), wherein the management plane comprises a first radio operation frequency, and wherein a service period element specifies a plurality of terms of one or more service periods during which at least one 802.11 station (108-1) connects to a second 802.11 access point (104) over a data plane comprising a second radio operation frequency, wherein the second radio operation frequency is different from the first radio operation frequency; and
means to participate in the one or more service periods on the data plane between the at least one 802.11 station (108-1) and the second 802.11 access point (104) according to the terms specified by the service period element received over the management plane from the first 802.11 access point (102).

2. The apparatus of claim 1, wherein the service period element specifies a duration of the service period.

3. The apparatus of claim 1, wherein the service period element specifies a time of a beginning of the service period, wherein the at least one 802.11 station (180-1) wakes at the beginning of the service period to participate in one of the service periods, and a time of an end of the service period, wherein the at least one 802.11 station (108-1) stops participating in the one of the service periods.

4. The apparatus of claim 3, comprising:
means to wake the at least one 802.11 station (180-1) at the beginning of the one service period for a specific duration.

5. The apparatus of claim 1, wherein the data plane further comprises a third radio operation frequency.

6. The apparatus of claim 5, wherein the third radio operation frequency is shared by the at least one 802.11 station (108-1) and the first 802.11 access point (102).

7. The apparatus of claim 5, wherein the third radio operation frequency is shared by the at least one 802.11 station (108-1) and a third 802.11 access point (106) that is different from the first 802.11 access point (102) and the second 802.11 access point (104).

8. The apparatus of claim 1, wherein the first 802.11 access point (104) and the at least one 802.11 station (108-1) negotiate an individual agreement defining the one or more service periods by exchanging a plurality of service period elements.

9. One or more tangible, non-transitory computer readable media for synchronizing connectivity in a 802.11 wireless communication network (100), comprising a plurality of instructions that, in response to being executed on a processor, cause the processor to:
participate in a 802.11 communication on a management plane between at least one 802.11 station (108-1) and a first 802.11 access point (102), wherein the management plane comprises a first radio operation frequency, and wherein a service period element specifies a plurality of terms of one or more service periods during which at least one 802.11 station (108-1) connects to a second 802.11 access point (104) over a data plane comprising a second radio operation frequency; and
participate in the one or more service periods on the data plane between the at least one 802.11 station (108-1) and the second 802.11 access point (104) according to the terms specified by the service period element received over the management plane from the first 802.11 access point.

10. The one or more tangible, non-transitory computer-readable media of claim 9, wherein the first radio operation frequency is different from the second radio operation frequency.

11. The one or more tangible, non-transitory computer-readable media of claims 9 or 10, wherein the first radio operation frequency is the same as the second radio operation frequency, and wherein the first 802.11 access point (102) is different from the second 802.11 access point (104).

12. The one or more tangible, non-transitory computer-readable media of claim 9, wherein the service period element specifies a duration of the service period.

13. The one or more tangible, non-transitory computer-readable media of claim 9, wherein the service period element specifies a time of a beginning of the service period, wherein the at least one 802.11 station (180-1) wakes at the beginning of the service period to participate in one of the service periods, and a time of an end of the service period, wherein the at least one 802.11 station (108-1) stops participating in the one of the service periods.

14. The one or more tangible, non-transitory computer-readable media of claim 9, further comprising a plurality of instructions that, in response to being executed on a processor, cause the processor to wake the at least one 802.11 station (180-1) at the beginning of the one service period for a specific duration.

15. The one or more tangible, non-transitory computer-readable media of claim 9, wherein the data plane further comprises a third radio operation frequency.

## Patentansprüche

1. Vorrichtung zum Synchronisieren einer Konnektivität in drahtlosen 802.11-Kommunikationsnetzen (100), wobei die Vorrichtung Folgendes umfasst:
Mittel, um an einer 802.11-Kommunikation auf einer Managementebene zwischen mindestens einer 802.11-Station (108-1) und einem ersten 802.11-Zugangspunkt (102) teilzunehmen, wobei die Managementebene eine erste Funkbetriebsfrequenz umfasst und wobei ein Dienstperiodenelement mehrere Bedingungen einer oder mehrerer Dienstperioden spezifiziert, während der sich mindestens eine 802.11-Station (108-1) mit einem zweiten 802.11-Zugangspunkt (104) über eine Datenebene verbindet, die eine zweite Funkbetriebsfrequenz umfasst, wobei die zweite Funkbetriebsfrequenz von der ersten Funkbetriebsfrequenz verschieden ist; und
Mittel, um an der einen oder den mehreren Dienstperioden auf der Datenebene zwischen der mindestens einen 802.11-Station (108-1) und dem zweiten 802.11-Zugangspunkt (104) gemäß den durch das Dienstperiodenelement, das über die Managementebene von dem ersten 802-11-Zugangspunkt (102) empfangen wurde, spezifizierten Bedingungen teilzunehmen.

2. Vorrichtung nach Anspruch 1, wobei das Dienstperiodenelement eine Dauer der Dienstperiode spezifiziert.

3. Vorrichtung nach Anspruch 1, wobei das Dienstperiodenelement eine Zeit eines Beginns der Dienstperiode, wobei die mindestens eine 802.11-Station (180-1) zum Beginn der Dienstperiode aufwacht, um an einer der Dienstperioden teilzunehmen, und eine Zeit eines Endes der Dienstperiode, wobei die mindestens eine 802.11-Station (108-1) stoppt, an der einen der Dienstperioden teilzunehmen, spezifiziert.

4. Vorrichtung nach Anspruch 3, die Folgendes umfasst:
Mittel, um die mindestens eine 802.11-Station (180-1) zum Beginn der einen Dienstperiode für eine spezifische Dauer aufzuwecken.

5. Vorrichtung nach Anspruch 1, wobei die Datenebene ferner eine dritte Funkbetriebsfrequenz umfasst.

6. Vorrichtung nach Anspruch 5, wobei die dritte Funkbetriebsfrequenz durch die mindestens eine 802.11-Station (108-1) und den ersten 802.11-Zugangspunkt (102) gemeinsam genutzt wird.

7. Vorrichtung nach Anspruch 5, wobei die dritte Funkbetriebsfrequenz durch die mindestens eine 802.11-Station (108-1) und einen dritten 802.11-Zugangspunkt (106), der von dem ersten 802.11-Zugangspunkt (102) und dem zweiten 802.11-Zugangspunkt (104) verschieden ist, gemeinsam genutzt wird.

8. Vorrichtung nach Anspruch 1, wobei der erste 802.11-Zugangspunkt (104) und die mindestens eine 802.11-Station (108-1) eine individuelle Vereinbarung, die eine oder die mehreren Dienstperioden definiert, durch Austauschen mehrerer Dienstperiodenelemente aushandeln.

9. Ein oder mehrere materielle nicht transitorische computerlesbare Medien zum Synchronisieren einer Konnektivität in einem drahtlosen 802.11-Kommunikationsnetz (100), die mehrere Anweisungen umfassen, die als Reaktion darauf, dass sie durch einen Prozessor ausgeführt werden, bewirken, dass der Prozessor:
an einer 802.11-Kommunikation auf einer Managementebene zwischen mindestens einer 802.11-Station (108-1) und einem ersten 802.11-Zugangspunkt (102) teilnimmt, wobei die Managementebene eine erste Funkbetriebsfrequenz umfasst und wobei ein Dienstperiodenelement mehrere Bedingungen einer oder mehrerer Dienstperioden spezifiziert, während der sich mindestens eine 802.11-Station (108-1) mit einem zweiten 802.11-Zugangspunkt (104) über eine Datenebene verbindet, die eine zweite Funkbetriebsfrequenz umfasst; und
an der einen oder den mehreren Dienstperioden auf der Datenebene zwischen der mindestens einen 802.11-Station (108-1) und dem zweiten 802.11-Zugangspunkt (104) gemäß den durch das Dienstperiodenelement, das über die Managementebene von dem ersten 802-11-Zugangspunkt empfangen wurde, spezifizierten Bedingungen teilnimmt.

10. Ein oder mehrere materielle nicht transitorische computerlesbare Medien nach Anspruch 9, wobei die erste Funkbetriebsfrequenz von der zweiten Funkbetriebsfrequenz verschieden ist.

11. Ein oder mehrere materielle nicht transitorische computerlesbare Medien nach Anspruch 9 oder 10, wobei die erste Funkbetriebsfrequenz dieselbe wie die zweite Funkbetriebsfrequenz ist und wobei der erste 802.11-Zugangspunkt (102) von dem zweiten 802.11-Zugangspunkt (104) verschieden ist.

12. Ein oder mehrere materielle nicht transitorische computerlesbare Medien nach Anspruch 9, wobei das Dienstperiodenelement eine Dauer der Dienstperiode spezifiziert.

13. Ein oder mehrere materielle nicht transitorische computerlesbare Medien nach Anspruch 9, wobei das Dienstperiodenelement eine Zeit eines Beginns der Dienstperiode, wobei die mindestens eine 802.11-Station (180-1) zum Beginn der Dienstperiode aufwacht, um an einer der Dienstperioden teilzunehmen, und eine Zeit eines Endes der Dienstperiode, wobei die mindestens eine 802.11-Station (108-1) stoppt, an der einen der Dienstperioden teilzunehmen, spezifiziert.

14. Ein oder mehrere materielle nicht transitorische computerlesbare Medien nach Anspruch 9, die ferner mehrere Anweisungen umfassen, die als Reaktion darauf, dass sie auf einem Prozessor ausgeführt werden, bewirken, dass der Prozessor die mindestens eine 802.11-Station (180-1) zum Beginn der einen Dienstperiode für eine spezifische Dauer aufweckt.

15. Ein oder mehrere materielle nicht transitorische computerlesbare Medien nach Anspruch 9, wobei die Datenebene ferner eine dritte Funkbetriebsfrequenz umfasst.

## Revendications

1. Appareil de synchronisation de la connectivité dans des réseaux de communication sans fil 802.11 (100), l'appareil comprenant :
un moyen de participation à une communication 802.11 sur un plan de gestion entre au moins une station 802.11 (108-1) et un premier point d'accès 802.11 (102), le plan de gestion comprenant une première fréquence de fonctionnement radio, et dans lequel un élément de période de service spécifie une pluralité de conditions d'une ou de plusieurs périodes de service durant lesquelles au moins une station 802.11 (108-1) se connecte à un deuxième point d'accès 802.11 (104) sur un plan de données comprenant une deuxième fréquence de fonctionnement radio, la deuxième fréquence de fonctionnement radio étant différente de la première fréquence de fonctionnement radio ; et
un moyen de participation aux une ou plusieurs périodes de service sur le plan de données entre l'au moins une station 802.11 (108-1) et le deuxième point d'accès 802.11 (104) conformément aux conditions spécifiées par l'élément de période de service reçu sur le plan de gestion depuis le premier point d'accès 802.11 (102) .

2. Appareil selon la revendication 1, dans lequel l'élément de période de service spécifie une durée de la période de service.

3. Appareil selon la revendication 1, dans lequel l'élément de période de service spécifie un temps de début de la période de service, l'au moins une station 802.11 (108-1) se réveillant au début de la période de service pour participer à une des périodes de service, et un temps de fin de la période de service, l'au moins une station 802.11 (108-1) arrêtant de participer à l'une des périodes de service.

4. Appareil selon la revendication 3, comprenant :
un moyen de réveil de l'au moins une station 802.11 (108-1) au début de la période de service pendant une durée spécifique.

5. Appareil selon la revendication 1, dans lequel le plan de données comprend en outre une troisième fréquence de fonctionnement radio.

6. Appareil selon la revendication 5, dans lequel la troisième fréquence de fonctionnement radio est partagée par l'au moins une station 802.11 (108-1) et le premier point d'accès 802.11 (102).

7. Appareil selon la revendication 5, dans lequel la troisième fréquence de fonctionnement radio est partagée par l'au moins une station 802.11 (108-1) et un troisième point d'accès 802.11 (106) qui est différent du premier point d'accès 802.11 (102) et du deuxième point d'accès 802.11 (104).

8. Appareil selon la revendication 1, dans lequel le premier point d'accès 802.11 (104) et l'au moins une station 802.11 (108-1) négocient un accord individuel définissant les une ou plusieurs périodes de service en échangeant une pluralité d'éléments de période de service.

9. Un ou plusieurs supports tangibles, non transitoires, lisibles par ordinateur pour synchroniser la connectivité dans un réseau de communication sans fil 802.11 (100), comprenant une pluralité d'instructions qui, en réponse à leur exécution sur un processeur, amènent le processeur à :
participer à une communication 802.11 sur un plan de gestion entre au moins une station 802.11 (108-1) et un premier point d'accès 802.11 (102), le plan de gestion comprenant une première fréquence de fonctionnement radio, et dans lequel un élément de période de service spécifie une pluralité de conditions d'une ou de plusieurs périodes de service durant lesquelles au moins une station 802.11 (108-1) se connecte à un deuxième point d'accès 802.11 (104) sur un plan de données comprenant une deuxième fréquence de fonctionnement radio ; et
participer aux une ou plusieurs périodes de service sur le plan de données entre l'au moins une station 802.11 (108-1) et le deuxième point d'accès 802.11 (104) conformément aux conditions spécifiées par l'élément de période de service reçu sur le plan de gestion depuis le premier point d'accès 802.11.

10. Un ou plusieurs supports tangibles, non transitoires, lisibles par ordinateur selon la revendication 9, dans lesquels la première fréquence de fonctionnement radio est différente de la deuxième fréquence de fonctionnement radio.

11. Un ou plusieurs supports tangibles, non transitoires, lisibles par ordinateur selon les revendications 9 ou 10, dans lesquels la première fréquence de fonctionnement radio est identique à la deuxième fréquence de fonctionnement radio, et dans lesquels le premier point d'accès 802.11 (102) est différent du deuxième point d'accès 802.11 (104).

12. Un ou plusieurs supports tangibles, non transitoires, lisibles par ordinateur selon la revendication 9, dans lesquels l'élément de période de service spécifie une durée de la période de service.

13. Un ou plusieurs supports tangibles, non transitoires, lisibles par ordinateur selon la revendication 9, dans lesquels l'élément de période de service spécifie un temps de début de la période de service, l'au moins une station 802.11 (108-1) se réveillant au début de la période de service pour participer à une des périodes de service, et un temps de fin de la période de service, l'au moins une station 802.11 (108-1) arrêtant de participer à l'une des périodes de service.

14. Un ou plusieurs supports tangibles, non transitoires, lisibles par ordinateur selon la revendication 9, comprenant en outre une pluralité d'instructions qui, en réponse à leur exécution sur un processeur, amènent le processeur à réveiller l'au moins une station 802.11 (108-1) au début de la période de service pendant une durée spécifique.

15. Un ou plusieurs supports tangibles, non transitoires, lisibles par ordinateur selon la revendication 9, dans lesquels le plan de données comprend en outre une troisième fréquence de fonctionnement radio.
